# EUROPEAN PATENT SPECIFICATION

(11) **EP 2 992 132 B1**
(45) Date of publication and mention of the grant of the patent: **26.02.2020**
(21) Application number: 13721947.3
(22) Date of filing: 30.04.2013
(51) Int. Cl.: D06F 39/00, D06F 39/04, A47L 15/42

(54) **WASHING MACHINE WITH HEAT PUMP**
WASCHMASCHINE MIT WÄRMEPUMPE
LAVE-LINGE DOTÉ D'UNE POMPE À CHALEUR

(43) Date of publication of application: 09.03.2016
(73) Proprietor: Electrolux Appliances Aktiebolag, 105 45 Stockholm (SE)
(72) Inventor: CAVARRETTA, Francesco, I-33080 Porcia (PN) (IT); VIGNOCCHI, Massimiliano, I-33080 Porcia (PN) (IT)
(74) Representative: Electrolux Group Patents
(86) International application number: PCT/EP2013/059000
(87) International publication number: WO 2014/177192

(56) References cited:
- EP-A1- 2 096 203
- EP-A2- 2 193 741
- DE-A1-102008 054 833
- US-A- 5 709 041
- US-A1- 2003 131 623

## Description

The present invention relates to a washing machine for washing goods as, for example, a dish washing machine or a laundry washing machine.

In the present application, the washing machine can be a washing machine or a washing-drying machine (i.e. a washing machine which can both wash and dry the goods).

Washing-dryer machines carry out a washing phase and a drying phase of goods, such as laundry, contained in a processing chamber. The washing phase usually encompasses a treatment cycle comprising one or more washing cycles, one or more pre-washing cycle(s), rinsing cycle(s), and -in case of laundry- spinning cycle(s), and usually the drying phase immediately follows the washing phase. Washing machines carry out a washing phase only.

In a washing machine, it is known to use an electric heater to heat water to be used in a washing chamber.

In order to save energy consumption, it is also known to use a heat pump in place of or besides the electric heater for heating the water.

To improve efficiency of the washing heat pump and to avoid cooling down the ambient air it is also known to use a tank adapted to contain water or another fluid as a heat source for the washing heat pump, to be cooled down/solidified during heating of the process water.

A heat pump washing machine of the above disclosed type generally comprises:
- a chamber for receiving goods to be washed and possibly dried,
- a tank adapted to contain a fluid adapted to cool/solidify,
- a heat pump comprising a first heat exchanger, a second heat exchanger, a compressor and a pressure lowering device forming a circuit comprising a refrigerant, the first heat exchanger being adapted to heat said refrigerant and to cool/solidify said fluid, the second heat exchanger being adapted to cool said refrigerant and to heat process water to be used in the chamber.

EP 2 096 203 A1 discloses a household washing machine comprising a tub, a heater and a container. The container contains waste water (i.e. used process water) of a previous process phase (e.g., washing or rinsing phase). The household washing machine also comprises a heat pump comprising an evaporator thermally coupled to the container, a condenser, a compressor and an expansion valve. A heat pump medium is pumped from the compressor to the condenser, where liquefaction takes place accompanied by release of heat. The released heat is used to warm process water contained in the tub. From the condenser the medium passes via the expansion valve to the evaporator where the medium evaporates whilst absorbing heat from the waste water contained in the container. From the evaporator the medium runs back to the compressor. At the end of each process phase, the waste water is drained away from the tub into a waste water line via the container wherein the cooled waste water is replaced.

EP 2 224 049 A1 discloses a cleaning device comprising a tub, a waste water tank for intermediate storage of waste water from the tub, a heat pump for extracting heat from the waste water tank and supplying it to process water in the tub, and a controller configured to partially freeze the waste water in the waste water tank and to melt at least part of the ice located in the waste water tank by supplying process water from the tub towards the end of a washing process.

EP 2 206 824 A2 discloses a household appliance comprising a tub, a tank filled with liquid and a heat pump for extracting heat from the liquid contained in the tank and supplying the heat to the tub. The tank is a closed tank whose content is not changed within the framework of the normal process carried out by the household appliance.

During operation of the heat pump, the liquid in the tank is cooled down with respect to a starting temperature and, optionally, at least partially iced. The cooled/iced liquid needs to be regenerated, that is warmed up again towards the starting temperature, in order to be used again for a next, optionally immediately subsequent, process cycle. In case of ice generation, it is preferable that all the ice is melted before the next process cycle is started.

European patent application 12178490.4 still secret at the date of first filing of the present application discloses a washing machine of the above disclosed type wherein the tank is fluidly connected to water mains by means of a conduit configured so as to supply tap water from the water mains to the tank bypassing the chamber.

US 2005/0066538 discloses (Fig. 28) a washer having a heat pump hot water source wherein heat from hot drain water is recovered and stored with suitable phase change media, such as paraffin or eutectic salt or a blend thereof. Drain water passes through heat exchanger means integrated within the heat storage media, that transfer heat from the drain water to heat storage media. The heat storage media in the heat storage means retains the heat transferred from the drain water. A refrigerant of a heat pump transports the stored heat to a supply side heat storage means which transfers heat to incoming tap water. At the supply side heat storage means there may be a heat storage media, similar to the drain side media, to store the pumped heat.

EP 2 193 741 A2 discloses a household device which has a process area for treating goods with different temperatures and a heat accumulator. A side of a heat coupling tank is joined at the process area and another side of the heat coupling tank is joined at the heat accumulator. A filling medium is provided for program controlled supplying and guiding coupling fluid in or from the heat coupling tank. A thermal resistance between the process area and the heat accumulator is smaller, when the heat coupling tank is filled with the coupling fluid.

DE 10 2008 054833 A1 discloses a device for recovery and storage of heat energy from wastewater, having a wastewater reservoir for accommodating heated wastewater, having an industrial water reservoir for accommodating heated industrial water, wherein the wastewater reservoir and the industrial water reservoir are connected in a manner enabling heat transfer and having a storage reservoir for storing the heated industrial water. The device is able to store heated industrial water over an extended period with low loss. To this end, the industrial water reservoir at least partially surrounds the storage reservoir and the industrial water reservoir and the storage reservoir are in flow connection such that heated industrial water from the industrial water reservoir can enter the storage reservoir while gas having a heat insulating effect flows into the industrial water reservoir.

US 5 709 041 A discloses a device for recovering heat during the drying of a load in a clothes dryer of the once-through external air type, said machine comprising a tub for containing a load to be dried, a conduit for feeding external fresh air into said tub, and a conduit for expelling hot moist air from this latter and for feeding it into the environment in which the machine is located. A container is provided containing a phase change material or PCM in which heat transfer surfaces or channels are present, along or within one of these latter there passing at least part of the hot moist air from the exit of the tub so as to transfer thermal energy to said PCM, which changes its physical state or phase, within another of said channels or along another of said surfaces there passing at least part of the fresh air entering the machine and to which said energy is transferred by the return of said PCM to its original physical state or phase.

It is an object of the invention to provide an improved washing machine with a heat pump.

It is a further object of the invention to provide a washing machine with a heat pump with enhanced easiness of installation and/or upgrade of existing models.

The Applicant found that the above objects are achieved by providing a washing machine embodying a heat exchanger of a washing heat pump that relies on the combined use of at least two heat storage media, each having its temperature of phase transition to solid, briefly referred to hereinbelow also as melting point. By exploiting two different melting points, efficiency of the heat pump is improved.

In an aspect, the invention relates to a washing machine comprising:
- a chamber for receiving goods to be washed,
- a heat pump comprising a circuit comprising a refrigerant, a first heat exchanger, and a second heat exchanger, wherein the first heat exchanger is adapted to heat said refrigerant and to cool a heat storage means, and the second heat exchanger is adapted to cool said refrigerant and to heat process water to be used in the chamber,
the heat storage means comprising at least two heat storage media having two different temperatures of phase transition to solid,
characterised in that said at least two heat storage media are passed through by a portion of the refrigerant circuit.

According to the invention, the at least two heat storage media retain their own properties, and in particular their melting points, as opposed to a blend of heat storage media wherein the separate constituents are so combined or associated that they cannot be distinguished and in particular so that the blend has a single melting point.

The efficiency of the heat pump increases as the difference between the temperature at the first heat exchanger (in particular, evaporation temperature) and the temperature at the second heat exchanger (in particular, condensation temperature) of the heat pump refrigerant decreases, because a decreasing compression of the refrigerant by the compressor sufficies. The temperature at the second heat exchanger (condensation temperature) is dictated by the desired temperature of washing or process water, and thus the temperature at the first heat exchanger (evaporation temperature) should be kept as high as possible to minimize the above difference and to maximize the mass flow rate the compressor being equal - the higher the temperature, the higher the pressure of the refrigerant and thus the higher its mass flow rate, and the heat pump efficiency. On the other hand, the temperature at the first heat exchanger (evaporation temperature) of the heat pump is lower than the melting point of the heat storage means. In turn, the melting point of the heat storage means should be lower than the ambient temperature in order that it is liquid at ambient temperature.

Using at least two heat storage media having different melting points, during a first step in time the latent heat released by the solidifying heat storage medium having the highest melting point is used together with the sensible heat released by the cooling heat storage medium having the lowest melting point; when the heat storage medium having the lowest melting point is cooled down to its melting point, its latent heat of solidification is again exploited. This increases efficiency because latent heat exchange is used throughout the heat pump operation, which is much more than sensible heat exchange. One or more further heat storage medium(media) having intermediate melting points may be used.

In addition or as an alternative, using at least two heat storage media, it is possible to separate in space the heat storage media along the length of the evaporator, so that in a first step in space the refrigerant evaporation exploits the latent heat released by the solidifying heat storage medium having the lowest melting point, and in a second step in space the refrigerant evaporation exploits -in particular for superheating- the latent heat released by the solidifying heat storage medium having the higher melting point. This allows keeping the refrigerant evaporation temperature higher than what would be feasible with only one heat storage medium, with increased efficiency of the heat pump. Indeed there must be a sufficient difference of temperature between the evaporation or superheating temperature of the refrigerant and the melting temperature of the heat storage medium/media to ensure proper operation of the heat pump.

Preferably the at least two heat storage media at least partially undergo a phase transition to solid, and the phase transition to solid of at least one of the two heat storage media occurs at or below 20°C.

In some embodiments, the at least two heat storage media are arranged spatially distinct along the portion of refrigerant circuit forming the first heat exchanger.

In this case the heat storage medium(media) having the lowest melting point preferably is (are) arranged spatially upstream of that or those having the highest melting point in the direction of flow of the refrigerant, and the heat storage medium(media) having the highest melting point is arranged spatially downstream thereof, where the refrigerant is superheating. This allows using a higher evaporation temperature of the refrigerant in the upstream circuit portion before superheating, closer to that of the low melting point heat storage medium(media), because a sufficient difference of temperature required to allow superheating is ensured with respect to the downstream, high melting point heat storage medium(media).

In some embodiments, said at least two heat storage media comprise at least one mixture of: water and at least one phase change material.

In the present description and attached claims, term "mixture" is used to indicate a portion of matter comprising two or more components that retain their own properties, and in particular their melting points or temperatures of phase transition to solid.

In the present description and attached claims, term "phase-change material" or PCM is used to indicate a substance with a high heat of fusion which, melting and solidifying at a certain temperature, is capable of storing and releasing large amounts of energy.

By using a mixture of water and at least one phase change material, at each position along of the refrigerant circuit the above disclosed steps in time may occur, with increased efficiency: while water and a possible low melting point PCM cools down, the possible high melting point PCM solidifies releasing latent heat; thereafter the possible low melting point PCM and/or the water solidify again releasing latent heat. Water may also be merely used as carrier for two or more PCMs without having it icing during operation of the heat pump.

Each phase change material may be encapsulated or microencapsulated in plastics or metal and immersed in water, or may be immersed in a porous matrix with high thermal conductivity.

In embodiments, said at least two heat storage media comprise at least two phase change materials, different from water.

Similarly to the previous embodiments, efficiency of the heat pump is increased with respect to use of just one phase change material.

Preferably at least two phase change materials are present in a different amount, more preferably the amount of the phase change material having the lowest temperature of phase transition to solid is the greatest. The material having the lowest melting point is designed and sized for full operation of the heat pump, while the material(s) with higher(highest) melting point is(are) sized for a transient phase of lowering temperature.

The at least two phase change materials may be chemically and physically separate, and stacked transversally with respect to a prevailing direction of a zigzag portion of refrigerant circuit forming the first heat exchanger.

In the present description and attached claims, the "prevailing direction" is meant to indicate the direction of comparatively long parallel lengths of circuit that are joined by comparatively short lengths of circuit in a zigzag pattern of a refrigerant evaporator. The refrigerant thus passes back and forth in thermal contact with alternating or consecutive phase change materials and over again. In this way the same advantages as disclosed for the water based system are obtained, of exploiting the latent heat of the PCM having the highest melting point first in time, and the latent heat of the PCM having the lowest melting point thereafter.

Preferably each phase change material has a temperature of phase transition to solid lower than or equal to 20°C.

Preferably each phase change material has a temperature of phase transition to solid higher than water.

Preferably each phase change material has a latent heat of fusion higher than water. In this case, it might also have a melting point lower than water.

Phase change materials having a temperature of phase transition to solid higher than that of water may also be advantageously used even if they have a latent heat of fusion lower than that of water.

Preferred phase change materials for use in the washing machine of the invention include for example organic PCMs (parrafin and fatty acids), inorganic PCMs (salt hydrates), eutectics (organic-organic, organic-inorganic, inorganic-inorganic compounds).

The heat storage means may be housed in at least one first tank that is a closed tank whose content is not changed within the framework of the normal process carried out by the washing machine.

Alternatively, the heat storage media may be housed in at least one first tank that may be an open tank, connected to the washing chamber to receive waste water to regenerate the heat storage media in the tank by replacement of the water part thereof with hot waste water.

As a further alternative, similarly to the already cited washing-dryer machine of European patent application 12178490.4, the heat storage media may be housed in at least one first tank that is an open tank directly fluidly connected to the water mains, that is by means of a conduit that bypasses the chamber, what enables to regenerate the heat storage means in the tank by replacement of the water part thereof with clean tap water also during operation of the washing heat pump. Therefore, preferably the at least one first tank has an input selectively connected to the water mains or to an outlet of the chamber for receiving goods, possibly via a recirculation means such as a pump.

Preferably, the at least one first tank has an output selectively connected to the chamber for receiving goods, so that cooled water may be used to rinse the goods, having filtered the PCM(s) to remain in the at least one tank.

Preferably, the output of the at least one first tank is selectively connected to the chamber for receiving goods through a detergent/softener dispenser.

A second tank may be provided at the second heat exchanger, having an input selectively connected to the water mains, and an outlet selectively connected to the chamber so that process water can be heated before entering the chamber.

In another embodiment, a second tank may be provided at the second heat exchanger, having an input selectively connected to the water mains and to an outlet of the chamber, and an outlet selectively connected to the chamber so that process water can be heated before entering the chamber and/or circulated through the second heat exchanger and the chamber to increase the rate of heating thereof.

Typically, circulation means such as a pump are provided for circulating the water from the outlet of the chamber to the inlet of the at least one first or second tank.

Preferably, the output of the second tank where provided for is connected to the chamber selectively passing through a detergent/softener dispenser.

In a preferred embodiment, the first heat exchanger comprises a tube arrangement adapted to aborb heat.

In a preferred embodiment, the second heat exchanger comprises a tube arrangement adapted to deliver heat.

In an embodiment, the refrigerant is adapted to evaporate inside the first heat exchanger and to condense inside the second heat exchanger.

In this embodiment, the first heat exchanger is an evaporator and the second heat exchanger is a condenser.

In another embodiment, the refrigerant operates non-conventional cycles, as for instance carbon dioxide, and does not undergo a phase change (condensation and evaporation) in the first heat exchanger and second heat exchangerThe refrigerant is advantageously circulated through said circuit. Suitably, said circuit is a closed recirculation circuit.

Suitably, the washing machine comprises a water inlet circuit for inputting tap water into the at least one first and/or the second tank and/or into a detergent/softener dispenser and/or into the chamber for receiving goods.

In an embodiment, the second tank where provided for is fluidly connected to a water circuit conducting the process water into the chamber.

In an embodiment, the water circuit is a recirculation circuit adapted to drain water from the chamber and to return it back into the chamber at another location. Suitably, the recirculation circuit comprises a pump and a pipe arrangement. This solution enables to recirculate the water through the recirculation circuit, which is thermally coupled to the refrigerant at the second heat exchanger, till a desired process temperature is reached.

In another embodiment, the second tank where provided for is fluidly connected to a water circuit adapted to draw water directly from the water mains, bypassing the chamber, and to deliver it into the chamber (without recirculation). In this embodiment, tap water from water mains is heated by the refrigerant at the second heat exchanger before entering the chamber. The second heat exchanger thus operates only on contact with tap water.

Suitably, the washing machine comprises a water outlet circuit for discharging waste water (i.e. used water) from the chamber and/or from the at least one first tank. The water outlet circuit is advantageously fluidly connected to the bottom of the chamber.

The water outlet circuit can comprise draining pipes and optionally a draining pump, adapted to discharge waste water from the chamber after process cycles (e.g. washing, rinsing cycles) and/or from the at least one first tank when regeneration of the water is necessary or desired.

Advantageously, the washing machine further comprises a control unit configured to control means for circulating the refrigerant and/or for controlling the path(s) and/or flow(s) of the water as one of said heat storage media and/or of said process water and to control operation of the rest of the washing machine.

The control unit is advantageously configured to i.a. manage entry of tap water from the water mains into any tank and/or the detergent/softener dispenser and/or directly into the chamber for receiving goods based on a current washing cycle and/or based on the temperature of the tap water; and is configured to manage exit of the waste water from the chamber to a discharge pipe or to the first tank(s).

The control unit is also advantageously configured to i.a. manage regeneration of the heat storage media in the at least one first tank, cooled/solidified during operation of the heat pump. When water is used as one of said heat storage media, suitably, the control unit is configured to manage entry of tap water from the water mains and/or waste water from the chamber into the at least one first tank and to manage exit of at least part of the water cooled at the first heat exchanger to the water outlet and/or to the detergent/softener dispenser and/or to the chamber for a cold water washing or rinsing cycle. This, with the purpose of melting any ice formation in the at least one first tank and at least partially replacing cooled water in the at least one first tank with tap water at a higher temperature, and optionally to save water.

Regeneration may also be obtained by mere contact of the heat storage media with a circuit of waste water, by exploiting heat from the compressor and the motor of the drum, or even by just waiting time between operation cycles of the heat pump.

In a preferred embodiment, the control unit is configured to operate the washing heat pump so that the heat storage means is at least partially solidified. In this way, the latent heat of the phase transition from fluid to solid is advantageously used and the washing heat pump efficiency is improved.

Preferably the washing machine is a laundry washing machine or washing drying machine wherein said chamber comprises a tub wherein a perforated drum is rotatably contained.

Features and advantages of the present invention will be more readily understood from the following detailed description of a preferred embodiment thereof, which is provided below by way of non-limiting example with reference to the accompanying drawings, wherein:
- FIG. 1 diagrammatically shows a washing machine according to the invention;
- FIG. 2 to 4 show different embodiments of a heat storage means according to the invention; and
- FIG. 5 diagrammatically shows the pattern of temperatures against evaporator length.

Like elements are denoted by like reference signs throughout the Figures.

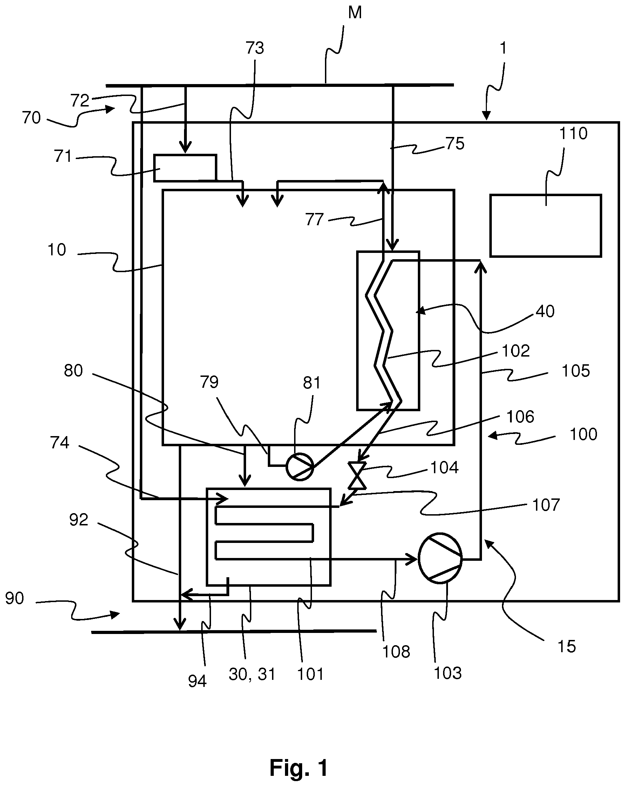

FIG. 1 shows an embodiment of the components of a washing machine 1 according to the invention, having a heat pump for heating the washing water.

A washing machine treats goods (typically laundry or dishes) during a washing phase wherein the goods are washed with water and possible additives, and/or a drying phase, generally subsequent to the washing phase, wherein the goods are dried at least in part.

Washing machine 1 comprises a chamber 10 for treating goods, a heat storage means 30 possibly contained within at least one first tank 31 (see below), and a washing heat pump 15 adapted to absorb heat from the heat storage means 30 and to release heat to water to be used in the chamber 10 during a washing phase, also referred to as process water hereinafter.

In the case of a laundry washing machine, the chamber 10 can comprise a tub wherein a drum (not shown), optionally perforated, is rotatably contained.

The washing machine comprises a water outlet circuit 90 for discharging waste water (i.e. used water optionally mixed with washing products) from the chamber 10 and/or from the heat storage means 30 after process cycles (e.g., washing, rinsing cycles).

The water outlet circuit 90 can comprise a draining pump (not shown) and draining pipes 92, 94.

The draining pipe 92 is fluidly connected to an outlet of the chamber 10, advantageously to the bottom of the chamber 10.

The draining pipe 94 is fluidly connected to an outlet of the tank 31 containing the heat storage means 30.

The washing machine 1 advantageously further comprises a water inlet circuit 70 (only diagrammatically shown) adapted to supply water, that can be optionally mixed with washing products, into the chamber 10. The water inlet circuit 70 advantageously comprises a detergent/softener dispenser 71 and water inlet pipes 72, 73, 74, 75.

The water inlet pipes 72 and 73 fluidly connect water mains M to the chamber 10 via the dispenser 71.

The dispenser 71 is adapted to be filled with products, for example detersives, softener, bleaching, sparkling/rinse aid substances, etc. The dispenser 71 can comprise one or more compartments (not shown) for one or more products from which a certain amount of these products, depending on the washing program/cycle, is delivered into the chamber 10.

The water inlet pipe 74 fluidly connects water mains M to the tank 31 containing the heat storage means 30.

The water inlet pipe 75 fluidly connects water mains M to a second tank 40.

A pipe (not shown) directly connecting water mains M to chamber 10 may also be provided.

A pipe (not shown) may fluidly connect an outlet of the at least one first tank 31 housing water as part of heat storage means 30 to the dispenser 71 so as to reach the chamber 10 via the pipe 73. This fluid connection may be used when cold process water is desired into chamber 10 such as for a cold washing or rinsing cycle.

An outlet of the second tank 40 is fluidly connected to the chamber 10, through a pipe 77, optionally through dispenser 71.

The outlet of the chamber 10 is optionally fluidly connected, besides to the water discharge circuit 90, to an inlet of second tank 40 through a pipe 79 and/or to an inlet of the first tank 31 through a pipe 80.

Advantageously, a pump 81 is inserted in pipe 79 and used to circulate water between the chamber 10 and the second tank 40.

Switching and/or flow rate controlling valves, such as electrovalves, are suitably provided to control the path(s) and flow rate(s) of water in the above described pipes.

A refrigerant circuit 100 comprises a first circuit portion 101 thermally coupled with heat storage means 30 and a second circuit portion 102 thermally coupled to process water, e.g. housed within second tank 40.

Refrigerant circuit 100 further comprises a compressor 103, and an expansion element 104.

Expansion element 104 can be an electrovalve as an expansion valve that may be a thermostatic or electronic valve, or a capillary tube.

As an alternative to the above described open first tank 30 adapted to hold an amount of tap water/ice, said first tank 31 housing water as part of heat storage means 30 can be a closed tank 31 whose content is not changed (besides the change of state) within the framework of the normal process carried out by the washing machine.

In still another alternative, the first tank 31 housing water as part of heat storage means 30 can have an input that may be selectively, such as through an electrovalve, put in fluid connection with water mains M (pipe 74), put in fluid connection with waste water from the chamber 10 (pipe 80), or be closed.

As said, the first tank 31 can have an output fluidly connected, preferably selectively, such as through an electrovalve, to the water outlet circuit 90 (pipe 94) in order to drain away cooled/iced water from the first tank 31 via the water outlet circuit, or to chamber 10 via dispenser 71 (pipes not shown).

It is noted that the tank 31 advantageously contains tap water and/or waste process water, possibly mixed with the above mentioned products and in addition with phase change material(s) as detailed below. In the case of an open tank 31, means for retaining the phase change material(s) such as a filter, are suitably provided.

The amount of heat storage media 30 and the volume of the first tank 31 depend on the amount of water that must be heated up during a washing process cycle of the washing machine 1, the temperature required for the process water, and the percentage of frozen fluid in the tank 30.

Refrigerant circuit 100, heat storage media 30 and second tank or heat exchanger 40 embody a heat pump 15 whereby process water is heated at second tank 40: at heat storage means 30 the refrigerant is heated and heat storage media contained therein are cooled down/freezed, embodying a first heat exchanger or evaporator; and at second tank 40 the refrigerant is cooled and process water is heated embodying a second heat exchanger or condenser.

Namely, during operation of the washing heat pump 15 (that is, when the compressor 103 is switched-on), heat is generated at the condenser or second tank 40, i.e. released to the process water, and cold is generated at the evaporator or at least one first tank 30, i.e. heat is subtracted from the heat storage media 30.

More in detail, the refrigerant is pumped from the compressor 103, usually trough a connecting pipe 105, to the condenser or second circuit portion 102, where liquefaction takes place accompanied by release of heat. The released heat is used to warm water to be used in the chamber 10. From the condenser or second circuit portion 102 the refrigerant passes, usually trough a connecting pipe 106 and via the pressure lowering device 104, and usually trough a connecting pipe 107, to the evaporator or first circuit portion 101 where the refrigerant evaporates whilst absorbing heat from the heat storage means 30. From the evaporator or first circuit portion 101 the refrigerant runs back, usually trough a connecting pipe 108, to the compressor 103.

The first circuit portion 101 can comprise a pipe or a series of pipes properly shaped and immersed in the heat storage means 30.

The refrigerant of the washing heat pump 15 is properly selected so as to have an evaporation temperature below the melting points -that are more than one as detailed below- of the heat storage means 30.

Thus, within evaporator or first heat exchanger 30, 101, the refrigerant recovers thermal energy from the heat storage means 30, cooling it down and solidifying it. The thermal energy is transferred to the washing or process water via condenser or second heat exchanger 40, 102.

According to the invention, the heat storage means comprises at least two heat storage media.

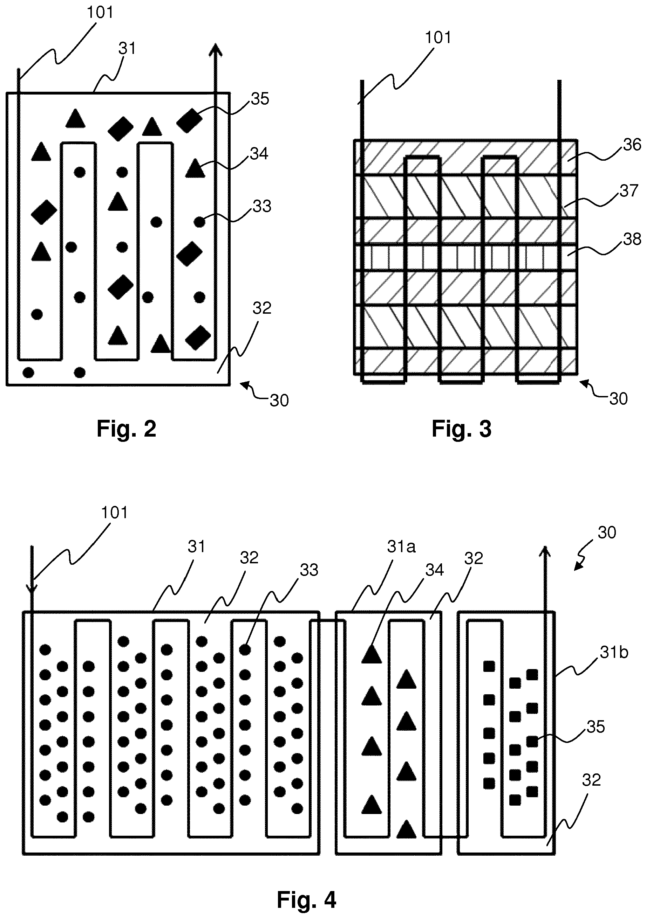

In one embodiment, as diagrammatically shown in FIG. 2, the heat storage means 30 or at least two heat storage media comprise(s) a mixture of water 32 and at least one phase change material (PCM), preferably at least two phase change materials as diagrammatically shown by different kind of capsules 33, 34, 35, housed in a single tank 31 housing the entire first refrigerant circuit portion 101 or evaporator. Stirring means (not shown) may be provided within tank 31. The phase change material(s) may be microencapsulated or encapsulated in capsules as diagrammatically shown at references 33, 34, 35, immersed in water. Within the mixture, each of the water and at least one phase change material are chemically separate, and retain their own melting point.

In another embodiment, as diagrammatically shown in FIG. 3, the heat storage means 30 comprises an arrangement of at least two phase change materials, in packets or layers 36, 37, 38 transversal to the long lengths of the first refrigerant circuit portion 101, so that the refrigerant flowing in zigzag circuit portion 101 passes back and forth through the phase change materials 36, 37, 38 in succession and then over again. The phase change materials may be arranged in a same plane as the circuit portion, intersecting it, or the phase change materials may embody the fins of the first heat exchanger, the circuit portion being in contact therewith. More layers of each phase change material 36, 37, 38 may be present as shown to more completely "mix" the materials. Since water is lacking, the above described tank 31 and related inputs and outputs may not be present.

In the embodiments of FIG. 2 and 3, as the refrigerant evaporates in circuit portion 101, the phase change materials 33-38 and the water 32 if present first cool down exchanging sensible heat. The highest melting point phase change material 35, 38 solidifies first and thus exchanges latent condensation heat, which has a high rate, while the lower/lowest phase change material 33, 36 and/or water 32 reaches its own melting point. When the intermediate and lower/lowest phase change material 33, 34, 36, 37 and/or water 32 reaches its own melting point, it/they start(s) solidifying, again exchanging high latent condensation heat. This allows latent heat being exploited during essentially the entire refrigerant evaporation phase. Even if room temperature falls below the highest melting point of heat storage means 30 so that the corresponding phase change material 35, 38 is already solid at start up, the heat pump 15 may still operate efficiently because the material 35, 38 having the highest melting point will only exchange sensible heat, but the other material(s) 32, 33, 34, 36, 37 will still be capable of cooling down in the liquid state and then condense releasing latent solidification heat.

Preferably, in the embodiment of FIG. 2 the mixture comprises water 32 and two or three phase change materials 33-35; in the embodiment of FIG. 3 there are preferably at least three phase change materials 36-38 as shown.

Preferably the quantity of the highest melting point material 35, 38 is less than the quantity of the lower/lowest melting point phase change material 33, 36, because it needs to exchange latent heat only during a transient temperature, while the lowest melting point phase change material needs to exchange latent heat at full operation of the heat pump.

The heat pump may be designed so as to guarantee the desired amount and temperature of process water in second heat exchanger 40, 102 only considering the heat exchange between refrigerant and the lowest melting point material (be it a PCM 33, 36 or water 32), and the system will then operate more efficiently in the majority of situations, when room temperature is above the highest melting point within heat storage means 30, thanks to the provision of the (small) amount of higher melting point material(s) 34, 35, 37, 38 exchanging latent heat at the beginning of operation of the heat pump.

Water 32, if present, may act as one heat storage medium cooling down and solidifying, or it may just act as carrier material, transferring heat from the PCM microspheres or balls 33-35 to the refrigerant circuit portion.

In the embodiment of FIG. 4, the heat storage means 30 comprises at least two tanks and preferably three tanks 31, 31a, 31b arranged in succession along the first refrigerant circuit portion 101 at each sub-portion thereof. Each tank comprises water 32 and one phase change material 33, 34, 35, but it might contain water and two or more PCMs.

What has been said above regarding inputs and outputs of first tank 31 apply to other tanks 31a, 31b.

The melting point of at least one material 33 in the first tank 31 is comparatively low, the melting point of at least one material 35 in the last (third in FIG. 4) tank 31b is comparatively high, and the melting point of at least one material 34 in the intermediate tank 31a, if present, is between the highest and the lowest melting points of the heat transfer means 30.

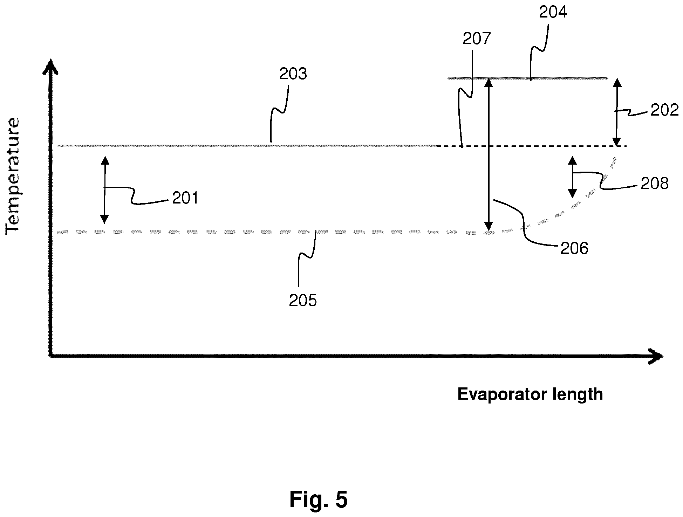

Thus, the melting point increases along the direction of flow of the refrigerant, so that the melting point(s) downstream are higher when the refrigerant superheats after having completely evaporated upstream in thermal contact with the lower melting point material(s). This provision allows the superheating to take place even if the evaporation takes place at a high temperature, because the temperature difference between the melting point of the heat storage means and the evaporation/superheating temperature is guaranteed. This is diagrammatically shown in FIG. 5: the temperature difference 201, 202 between the melting points 203, 204 of the heat storage media and the refrigerant temperature 205 is kept to the required minimum along essentially the entire evaporator, and is higher than the required minimum (see temperature difference 206) only for a short length of evaporator where superheating takes place. If the second heat storage medium with higher melting point were not used, then the refrigerant evaporation temperature could not be maintained as high as shown because the difference would be too small or null at the end of the evaporator, see dotted line 207 and temperature difference 208.

Evaporation at a high temperature increases the efficiency of the heat pump as detailed in the introduction of this disclosure, by decreasing the work required by the compressor and increasing the mass flow rate of refrigerant.

Moreover, again high latent heat exchange is exploited, all over the length of the first circuit portion.

At each or at some sub-portion of the refrigerant circuit portion 101, instead of tanks 31, 31a, 31b with a mixture of water and PCM(s), a packet of a phase change material may be provided, or more packets analogously to FIG. 3.

Considering that during operation of the washing heat pump 15, ice (if any) is inclined to build up around the coil of evaporator or first heat exchanger 30, 101, if the first tank(s) 31, 31a, 31b is(are) not a closed tank then its(their) input(s) and output(s) are preferably positioned sufficiently far apart from the coil so as to prevent any obstruction of the input and output due to ice formation.

In the washing machine 1, the condenser or second heat exchanger 40, 102 can be a plate heat exchanger or similar fluid to fluid heat exchanger. The process water to be used in the chamber 10 is made to flow through the condenser or second heat exchanger 40, 102 so that it exchanges thermal energy with the refrigerant of heat pump 15.

The process water can be continuously recirculated by pump 81 through the condenser or second heat exchanger 40, 102 and back to the chamber 10 until the desired temperature is reached. Process water is preferably drained from the chamber 10 from the bottom via pipe 79 and returned back into the chamber 10 at another location such as via pipe 77, preferably at an upper location, via the condenser or second heat exchanger 40, 102 and possibly via dispenser 71 (path not shown).

Alternatively, tap water can be heated directly, by flowing through the condenser or second heat exchanger 40, 102, before entering into the chamber 10. In this case, pipe 75 is adapted to directly drain tap water from the water mains M bypassing the chamber 10, to conduct the tap water through the condenser or second heat exchanger 40, 102 and then via pipe 77 into the chamber 10, without recirculation, so that pump 81 and pipe 79 are missing. In this embodiment, the condenser or second heat exchanger 40, 102 operates without being in contact with waste water.

The washing machine 1 and especially its washing heat pump 15 may feature further provisions and/or additional components to improve the efficiency of the washing phase.

The washing machine 1 suitably comprises a control unit 110 configured to control operation of the washing-dryer machine 1.

When the washing machine 1 is turned on in order to perform a predetermined goods treating program, the control unit 110 is advantageously configured to control the components of the washing machine 1, notably the washing heat pump 15 and process water circulation pump 81 where provided for. Control unit 110 is also configured to operate any switching device and/or flow rate controlling device, such as the various electrovalves described herein.

In particular, the control unit 110 may be configured to control start/stop of tap water entry from the water mains M and start/stop of water exit to the water outlet circuit 90 in order to make process water available and/or, when water is used within heat transfer means 30, to perform water regeneration within first tank(s) 31, 31a, 31b for further usage as thermal energy source, namely with the purpose of melting any ice formation and replacing at least part of the cooled water with tap water at a higher temperature.

Starting/stopping tap water entry into the washing machine 1 can be performed by the control unit 110 by opening/closing at least one suitable valve (not shown) and switching on/off a draining pump where provided for, such as pump 81.

Control unit 110 is configured to switch the washing heat pump 15 on any time water has to be heated for use in the chamber 10 in order to perform a process cycle (e.g., washing, rinsing, and similar) of the predetermined program.

The control unit 110 is also advantageously configured to switch the washing heat pump 15 off when the process water reaches a desired process temperature or when the heat storage media 30 reaches a predetermined condition (for example, when it is in large part solidified).

As said, the heat storage media 30 exchanges sensible heat with the refrigerant in first circuit portion 101 during a cooling phase of the water and/or phase change material(s), and latent heat during a solidifying phase of the phase change material(s) or icing phase of water (if any). The exploitation of the latent heat allows reducing the amount of heat storage means 30 required and therefore the overall dimensions of the first tank(s) 31, 31a, 31b. Accordingly, the control unit 110 is advantageously configured to operate the washing heat pump 15 so that the fluids in the first tank 31 are at least partially solidified.

Depending on the program design, heat pump power, and wash temperature, the washing heat pump 15 alone might be insufficient to heat the water up to the desired process temperature in the available/desired time. Therefore, a conventional electrical heater (not shown) may be comprised in the washing-dryer machine 1 as well. The conventional electrical heater can be suitably positioned at the bottom of the chamber 10.

In order to guarantee that the desired process temperature is reached for the desired amount of process water, the heat exchanger 40, 102 and the flow rate of the process water therein should be suitably sized. The refrigerant flowing within the circuit 100 of heat pump 15 should be capable of releasing the proper amount of heat at the second tank 40.

The refrigerant flowing within washing heat pump 15 should therefore be capable of receiving a proper amount of heat in the remainder of the heat pump circuit. Complete evaporation of the refrigerant should also be ensured in order to safeguard the compressor 103 from damages that would possibly be caused if liquid particles of refrigerant entered thereinto.

## Claims

1. A washing machine (1) comprising:
- a chamber (10) for receiving goods to be washed,
- a heat pump (15) comprising a circuit (101-108) comprising a refrigerant, a first heat exchanger (30, 101), a second heat exchanger (40, 102), and a heat storage means (30), wherein the first heat exchanger (30, 101) is adapted to heat said refrigerant and to cool the heat storage means (30), and the second heat exchanger (40, 102) is adapted to cool said refrigerant and to heat process water to be used in the chamber (10),
the heat storage means (30) comprising at least two heat storage media (32-38) having two different temperatures of phase transition to solid,
**characterised in that** said at least two heat storage media (32-38) are passed through by a portion (101) of the refrigerant circuit (101-108).

2. The washing machine of claim 1, wherein the at least two heat storage media (32-38) at least partially undergo a phase transition to solid, and the phase transition to solid of at least one of the two heat storage media (32-38) occurs at or below 20°C.

3. The washing machine of claim 1 or 2, wherein the at least two heat storage media (32-38) are arranged spatially distinct along the portion of refrigerant circuit (101) forming the first heat exchanger (30, 101).

4. The washing machine of claim 3, wherein a heat storage medium (33) having the lowest temperature of phase transition to solid is arranged spatially upstream of a heat storage medium (35) having the highest temperature of phase transition to solid in the direction of flow of the refrigerant.

5. The washing machine of any of claims 1-4, wherein said at least two heat storage media (30) comprise at least one mixture of: water (32) and at least one phase change material (33-38).

6. The washing machine of any of claims 1-4, wherein said at least two heat storage media (30) comprise at least two phase change materials (33-38).

7. The washing machine of claim 6, wherein the at least two phase change materials (33-38) are present in a different amount, preferably the amount of the phase change material having the lowest temperature of phase transition to solid is the greatest.

8. The washing machine of any of claims 6-7, wherein said at least two heat storage media (32-38) comprises at least two phase change materials (36-38) chemically and physically separate, and stacked transversally of a prevailing direction of a zigzag portion of the refrigerant circuit forming the first heat exchanger.

9. The washing machine of any of claims 5-8, wherein each of said phase change materials (33-38) has a temperature of phase transition to solid lower than or equal to 20°.

10. The washing machine of any of claims 5-9, wherein each of said phase change materials (33-38) has a temperature of phase transition to solid higher than water.

11. The washing machine of any of claims 5-10, wherein each of said phase change materials (33-38) has a latent heat of fusion higher than water.

12. The washing machine of any of claims 5-10, wherein each of said phase change materials (33-38) has a latent heat of fusion lower than water, and a temperature of phase transition to solid higher than that of water.

13. The washing machine of any of claims 1-11, wherein it is a laundry washing machine or washing-drying machine wherein said chamber (10) comprises a tub wherein a perforated drum is rotatably contained.

## Patentansprüche

1. Waschmaschine (1), umfassend:
- einen Laugenbehälter (10) zum Aufnehmen von Waschgut,
- eine Wärmepumpe (15), die einen Kreislauf (101-108) umfasst, der ein Kältemittel, einen ersten Wärmetauscher (30, 101), einen zweiten Wärmetauscher (40, 102) und ein Wärmespeichermittel (30) umfasst, wobei der erste Wärmetauscher (30, 101) geeignet ist, das Kältemittel zu erhitzen und das Wärmespeichermittel (30) zu kühlen, und der zweite Wärmetauscher (40, 102) geeignet ist, das Kältemittel zu kühlen und in dem Laugenbehälter (10) zu verwendendes Prozesswasser zu erhitzen,
wobei das Wärmespeichermittel (30) wenigstens zwei Wärmespeichermedien (32-38) umfasst, die zwei unterschiedliche Temperaturen des Phasenübergangs zu fest aufweisen,
**dadurch gekennzeichnet, dass** die wenigstens zwei Wärmespeichermedien (32-38) durch einen Abschnitt (101) des Kältemittelkreislaufs (101-108) geführt sind.

2. Waschmaschine nach Anspruch 1, wobei die wenigstens zwei Wärmespeichermedien (32-38) wenigstens teilweise einen Phasenübergang zu fest durchlaufen und der Phasenübergang zu fest wenigstens eines der zwei Wärmespeichermedien (32-38) bei oder unter 20 °C erfolgt.

3. Waschmaschine nach Anspruch 1 oder 2, wobei die wenigstens zwei Wärmespeichermedien (32-38) räumlich getrennt entlang dem Abschnitt des Kältemittelkreislaufs (101) angeordnet sind, der den ersten Wärmetauscher (30, 101) bildet.

4. Waschmaschine nach Anspruch 3, wobei ein Wärmespeichermedium (33), das die niedrigste Temperatur des Phasenübergangs zu fest aufweist, räumlich stromaufwärts eines Wärmespeichermediums (35) angeordnet ist, das in der Strömungsrichtung des Kältemittels die höchste Temperatur des Phasenübergangs zu fest aufweist.

5. Waschmaschine nach einem der Ansprüche 1 bis 4, wobei die wenigstens zwei Wärmespeichermedien (30) wenigstens ein Gemisch aus Wasser (32) und wenigstens einem Phasenwechselmaterial (33-38) umfassen.

6. Waschmaschine nach einem der Ansprüche 1 bis 4, wobei die wenigstens zwei Wärmespeichermedien (30) wenigstens zwei Phasenwechselmaterialien (33-38) umfassen.

7. Waschmaschine nach Anspruch 6, wobei die wenigstens zwei Phasenwechselmaterialien (33-38) in unterschiedlicher Menge vorliegen, wobei vorzugsweise die Menge des Phasenwechselmaterials, das die niedrigste Temperatur des Phasenübergangs zu fest aufweist, am größten ist.

8. Waschmaschine nach einem der Ansprüche 6 bis 7, wobei die wenigstens zwei Wärmespeichermedien (32-38) wenigstens zwei Phasenwechselmaterialien (36-38) umfassen, die chemisch und physisch getrennt und quer zu einer vorherrschenden Richtung eines Zickzackabschnitts des Kältemittelkreislaufs, der den ersten Wärmetauscher bildet, übereinander angeordnet sind.

9. Waschmaschine nach einem der Ansprüche 5 bis 8, wobei die Phasenwechselmaterialien (33-38) jeweils eine Temperatur des Phasenübergangs zu fest aufweisen, die kleiner oder gleich 20° ist.

10. Waschmaschine nach einem der Ansprüche 5 bis 9, wobei die Phasenwechselmaterialien (33-38) jeweils eine Temperatur des Phasenübergangs zu fest aufweisen, die höher als die von Wasser ist.

11. Waschmaschine nach einem der Ansprüche 5-10, wobei die Phasenwechselmaterialien (33-38) jeweils eine Schmelzwärme aufweisen, die höher als die von Wasser ist.

12. Waschmaschine nach einem der Ansprüche 5 bis 10, wobei die Phasenwechselmaterialien (33-38) jeweils eine Schmelzwärme, die niedriger als die von Wasser ist, und eine Temperatur des Phasenübergangs zu fest, die höher als die von Wasser ist, aufweisen.

13. Waschmaschine nach einem der Ansprüche 1 bis 11, wobei diese eine Waschmaschine oder ein Waschtrockner ist, wobei der Laugenbehälter (10) eine Wanne umfasst, in der eine perforierte Trommel auf drehbare Weise enthalten ist.

## Revendications

1. Lave-linge (1) comprenant :
une chambre (10) destinée à recevoir des articles à laver,
une pompe à chaleur (15) comprenant un circuit (101-108) comprenant un réfrigérant, un premier échangeur de chaleur (30, 101), un second échangeur de chaleur (40, 102) et un moyen de stockage de chaleur (30), dans lequel le premier échangeur de chaleur (30, 101) est conçu pour chauffer ledit réfrigérant et pour refroidir le moyen de stockage de chaleur (30), et le second échangeur de chaleur (40, 102) est conçu pour refroidir ledit réfrigérant et pour chauffer l'eau de traitement à utiliser dans la chambre (10),
le moyen de stockage de chaleur (30) comprenant au moins deux milieux de stockage de chaleur (32-38) ayant deux températures différentes de transition de phase à l'état solide,
**caractérisé en ce que** lesdits au moins deux milieux de stockage de chaleur (32-38) sont traversés par une partie (101) du circuit de réfrigérant (101-108).

2. Lave-linge selon la revendication 1, dans lequel les au moins deux milieux de stockage de chaleur (32-38) subissent au moins partiellement une transition de phase à l'état solide, et la transition de phase à l'état solide d'au moins l'un des deux milieux de stockage de chaleur (32-38) se produit à 20°C ou moins.

3. Lave-linge selon la revendication 1 ou 2, dans lequel les au moins deux milieux de stockage de chaleur (32-38) sont disposés de manière spatialement distincte le long de la partie du circuit de réfrigérant (101) qui forme le premier échangeur de chaleur (30, 101).

4. Lave-linge selon la revendication 3, dans lequel un milieu de stockage de chaleur (33) ayant la température de transition de phase à l'état solide la plus faible est disposé spatialement en amont d'un milieu de stockage de chaleur (35) ayant la température de transition de phase à l'état solide la plus élevée dans la direction de circulation du réfrigérant.

5. Lave-linge selon l'une quelconque des revendications 1 à 4, dans lequel lesdits au moins deux milieux de stockage de chaleur (30) comprennent au moins un mélange d'eau (32) et d'au moins un matériau de changement de phase (33-38).

6. Lave-linge selon l'une quelconque des revendications 1 à 4, dans lequel lesdits au moins deux milieux de stockage de chaleur (30) comprennent au moins deux matériaux de changement de phase (33-38).

7. Lave-linge selon la revendication 6, dans lequel les au moins deux matériaux de changement de phase (33-38) sont présents en quantités différentes, la quantité de matériau de changement de phase ayant la température de transition de phase à l'état solide la plus faible étant de préférence la plus importante.

8. Lave-linge selon l'une quelconque des revendications 6 et 7, dans lequel lesdits au moins deux milieux de stockage de chaleur (32-38) comprennent au moins deux matériaux de changement de phase (36-38) chimiquement et physiquement séparés et empilés transversalement à une direction principale d'une partie en zigzag du circuit de réfrigérant formant le premier échangeur de chaleur.

9. Lave-linge selon l'une quelconque des revendications 5 à 8, dans lequel chacun desdits matériaux de changement de phase (33-38) a une température de transition de phase à l'état solide inférieure ou égale à 20°.

10. Lave-linge selon l'une quelconque des revendications 5 à 9, dans lequel chacun desdits matériaux de changement de phase (33-38) a une température de transition de phase à l'état solide supérieure à celle de l'eau.

11. Lave-linge selon l'une quelconque des revendications 5 à 10, dans lequel chacun desdits matériaux de changement de phase (33-38) a une chaleur de fusion supérieure à celle de l'eau.

12. Lave-linge selon l'une quelconque des revendications 5 à 10, dans lequel chacun desdits matériaux de changement de phase (33-38) a une chaleur de fusion inférieure à celle de l'eau et une température de transition de phase à l'état solide supérieure à celle de l'eau.

13. Lave-linge selon l'une quelconque des revendications 1 à 11, le lave-linge étant une machine de lavage de linge ou une machine de lavage-séchage dans laquelle ladite chambre (10) comprend une cuve dans laquelle un tambour perforé rotatif est contenu.
